(19) Europäisches Patentamt / European Patent Office / Office européen des brevets

(11) **EP 4 692 246 A1**

(12) **EUROPEAN PATENT APPLICATION**
published in accordance with Art. 153(4) EPC

(43) Date of publication:
**11.02.2026 Bulletin 2026/07**

(21) Application number: **25777738.3**

(22) Date of filing: **28.03.2025**

(51) International Patent Classification (IPC):
***C08L 101/02*** *(2006.01)* ***C08G 81/02*** *(2006.01)*
***C08K 3/04*** *(2006.01)* ***C08K 3/013*** *(2018.01)*
***C08K 5/353*** *(2006.01)* ***C08L 27/12*** *(2006.01)*
***C08L 101/00*** *(2006.01)*

(52) Cooperative Patent Classification (CPC):
**C08G 81/02; C08J 3/215; C08K 3/013; C08K 3/04; C08K 5/353; C08K 7/06; C08L 27/12; C08L 39/04; C08L 101/00; C08L 101/02**

(86) International application number:
**PCT/JP2025/012834**

(87) International publication number:
**WO 2025/206332 (02.10.2025 Gazette 2025/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2024 JP 2024057106**

(71) Applicants:
- **Daikin Industries, Ltd.**
  **Osaka-shi, Osaka 530-0001 (JP)**
- **National University Corporation Yamagata University**
  **Yamagata-shi, Yamagata 990-8560 (JP)**

(72) Inventors:
- **YAMAGUCHI, Shuhei**
  **Osaka-Shi, Osaka 530-0001 (JP)**
- **KOMORI, Masaji**
  **Osaka-Shi, Osaka 530-0001 (JP)**
- **YAMAUCHI, Akiyoshi**
  **Osaka-Shi, Osaka 530-0001 (JP)**
- **TAKAHASHI, Tatsuhiro**
  **Yonezawa-shi, Yamagata 992-8510 (JP)**
- **TOMIZAWA, Yuma**
  **Yonezawa-shi, Yamagata 992-8510 (JP)**
- **AWAZU, Haruto**
  **Yonezawa-shi, Yamagata 992-8510 (JP)**

(74) Representative: **Hoffmann Eitle**
**Patent- und Rechtsanwälte PartmbB**
**Arabellastraße 30**
**81925 München (DE)**

# (54) PARTICLES, COMPOSITION, MOLDED BODY, AND METHOD FOR PRODUCING PARTICLES

(57) The disclosure aims to provide a particle in which filler is sufficiently dispersed in resin, as well as a composition, a molded body, and a method for producing a particle. The disclosure provides a particle including a high performance engineering plastic resin; a filler; and a compound (I) containing multiple groups (I) each represented by the following formula:

[Chem. 1]

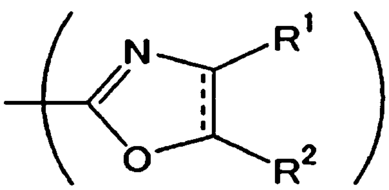

wherein $R^1$ and $R^2$ are the same as or different from each other and each represent a hydrogen atom or an organic group, and may be bound to each other to form a ring structure; and the double line depicted by a solid line and a dashed line represents a single bond or a double bond, the high performance engineering plastic resin being connected to the filler via the compound (I).

EP 4 692 246 A1

Processed by Luminess, 75001 PARIS (FR)

(Cont. next page)

FIG.1

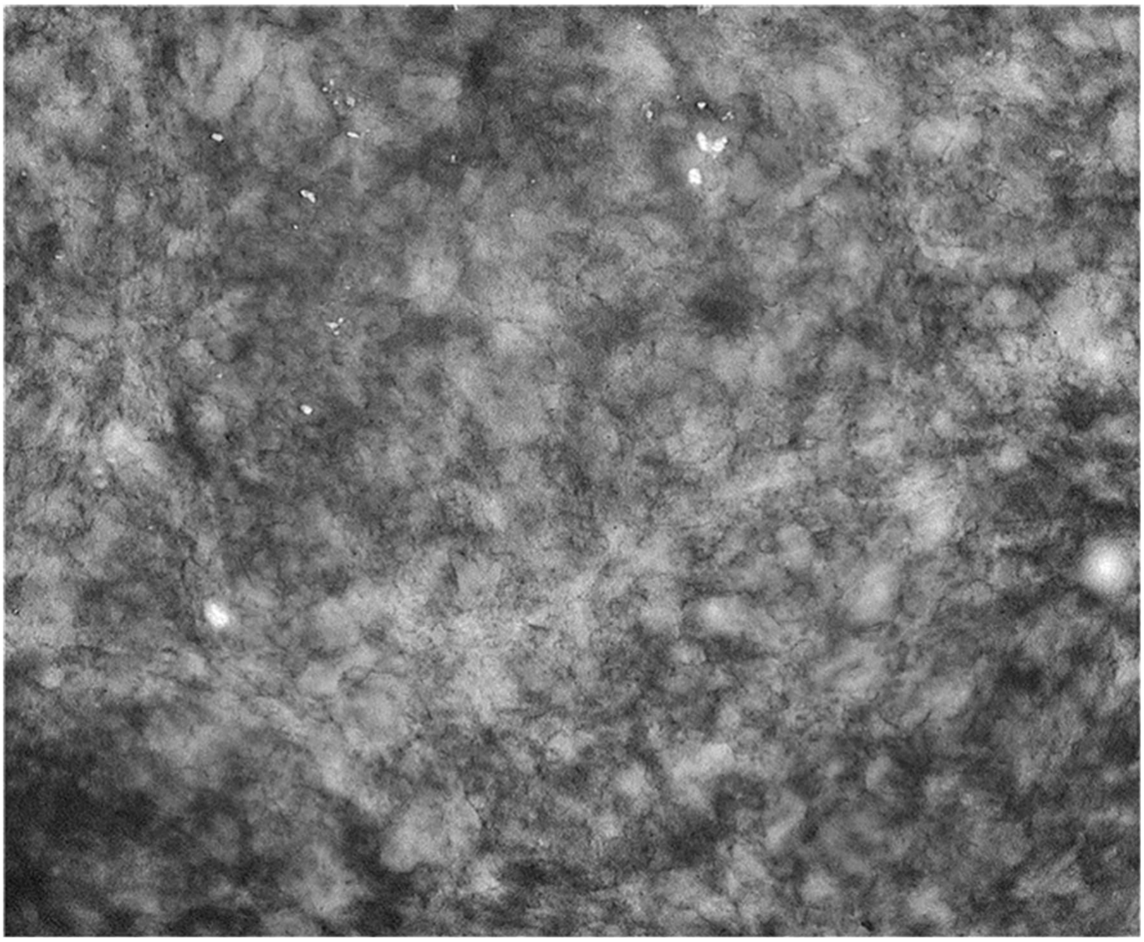

## Description

TECHNICAL FIELD

The disclosure relates to particles, compositions, molded bodies, and methods for producing particles.

BACKGROUND ART

Various approaches have been studied to improve the physical properties of composite materials containing filler and resin. For example, Patent Literature 1 describes that a fluororesin composition with excellent electrical properties can be produced by adding a fluororesin and carbon nanotubes that are surface-treated with a fluorinated surfactant.

CITATION LIST

- Patent Literature

Patent Literature 1: JP 2005-146081 A

SUMMARY OF INVENTION

- Technical Problem

However, filler may not be sufficiently dispersed in resin because filler is generally highly likely to aggregate.
The disclosure aims to provide a particle in which filler is sufficiently dispersed in resin, as well as a composition, a molded body, and a method for producing a particle.

- Solution to Problem

The disclosure (1) relates to a particle including a high performance engineering plastic resin; a filler; and a compound (I) containing multiple groups (I) each represented by the following formula:

[Chem. 1]

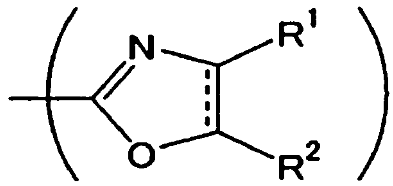

wherein $R^1$ and $R^2$ are the same as or different from each other and each represent a hydrogen atom or an organic group, and may be bound to each other to form a ring structure; and the double line depicted by a solid line and a dashed line represents a single bond or a double bond, the high performance engineering plastic resin being connected to the filler via the compound (I).
The disclosure (2) relates to the particle according to the disclosure (1), wherein the high performance engineering plastic resin has a thermal decomposition temperature of 330°C or higher.
The disclosure (3) relates to the particle according to the disclosure (1) or (2), wherein the high performance engineering plastic resin has a continuous use temperature of 140°C or higher.
The disclosure (4) relates to the particle according to any one of the disclosures (1) to (3), wherein the high performance engineering plastic resin includes at least one selected from the group consisting of a fluororesin, a liquid crystal polymer, polyetherimide, polyphenylene sulfide, polyaryletherketone, polysulfone, and polyethersulfone.
The disclosure (5) relates to the particle according to any one of the disclosures (1) to (4), wherein the high performance engineering plastic resin includes at least one selected from the group consisting of a fluororesin, a liquid crystal polymer, polyaryletherketone, and polyethersulfone.
The disclosure (6) relates to the particle according to any one of the disclosures (1) to (5), wherein the high performance engineering plastic resin includes a perfluororesin.
The disclosure (7) relates to the particle according to any one of the disclosures (1) to (6), wherein the high performance engineering plastic resin includes at least one selected from the group consisting of polytetrafluoroethylene,

a tetrafluoroethylene/perfluoro(alkyl vinyl ether) copolymer, and a tetrafluoroethylene/hexafluoropropylene copolymer.

The disclosure (8) relates to the particle according to any one of the disclosures (1) to (7), wherein the high performance engineering plastic resin includes at least one selected from the group consisting of a tetrafluoroethylene/perfluoro(alkyl vinyl ether) copolymer and a tetrafluoroethylene/hexafluoropropylene copolymer.

The disclosure (9) relates to the particle according to any one of the disclosures (1) to (8), wherein the filler includes a nanofiller.

The disclosure (10) relates to the particle according to any one of the disclosures (1) to (9), wherein the filler includes carbon nanotubes.

The disclosure (11) relates to the particle according to any one of the disclosures (1) to (10), wherein the filler includes at least one selected from the group consisting of multilayer carbon nanotubes and monolayer carbon nanotubes.

The disclosure (12) relates to the particle according to any one of the disclosures (1) to (11), wherein the filler is contained in an amount of 0.001 to 30% by mass.

The disclosure (13) relates to the particle according to any one of the disclosures (1) to (12), wherein the group (I) is an oxazoline group, and the compound (I) is an oxazoline compound.

The disclosure (14) relates to the particle according to the disclosure (13), wherein the oxazoline compound is an oxazoline group-containing polymer.

The disclosure (15) relates to the particle according to the disclosure (14), wherein the oxazoline group-containing polymer has a molecular weight of 2,000 to 400,000.

The disclosure (16) relates to the particle according to the disclosure (14) or (15), wherein the oxazoline group-containing polymer contains at least one selected from the group consisting of a 2-vinyl-2-oxazoline-derived repeating unit and a 2-isopropenyl-2-oxazoline-derived repeating unit.

The disclosure (17) relates to the particle according to any one of the disclosures (14) to (16), wherein the oxazoline group-containing polymer is poly-2-vinyl-2-oxazoline.

The disclosure (18) relates to the particle according to any one of the disclosures (14) to (16), wherein the oxazoline group-containing polymer is a copolymer of 2-isopropenyl-2-oxazoline and an acrylic monomer.

The disclosure (19) relates to the particle according to any one of the disclosures (1) to (18), wherein the compound (I) is contained in an amount of 0.01 to 50% by mass.

The disclosure (20) relates to the particle according to any one of the disclosures (1) to (19), wherein the high performance engineering plastic resin is contained in an amount of 80 to 99.9% by mass, the filler is contained in an amount of 0.01 to 0.5% by mass, and the compound (I) is contained in an amount of 0.1 to 10% by mass.

The disclosure (21) relates to a composition containing the particle according to any one of the disclosures (1) to (20).

The disclosure (22) relates to the composition according to the disclosure (21), which is solid or liquid at 25°C.

The disclosure (23) relates to a molded body including the composition according to the disclosure (21) or (22).

The disclosure (24) relates to the molded body according to the disclosure (23), which has a volume resistivity of $1.0 \times 10^{10}$ Ω·cm or less.

The disclosure (25) relates to the molded body according to the disclosure (23) or (24), wherein not more than 20 aggregates with a width of 50 μm or more are observed in an area of 0.3 $mm^2$ in an optical microscopic image.

The disclosure (26) relates to a method for producing a particle, the method including a step 1 of mixing a component A and a compound (I) containing multiple groups (I) each represented by the following formula:

[Chem. 2]

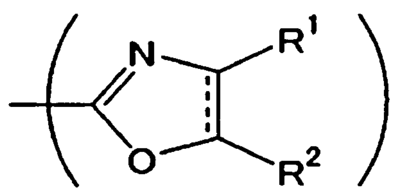

wherein $R^1$ and $R^2$ are the same as or different from each other and each represent a hydrogen atom or an organic group, and may be bound to each other to form a ring structure; and the double line depicted by a solid line and a dashed line represents a single bond or a double bond, a step 2 of mixing a mixture obtained in the step 1 and a component B in the presence of a solvent, and a step 3 of collecting a particle from a dispersion obtained in the step 2, the component A including one of a high performance engineering plastic resin and a filler, while the component B including the other.

The disclosure (27) relates to the method for producing a particle according to the disclosure (26), wherein the step 1 includes mixing the component A and the compound (I) in the presence of a solvent.

The disclosure (28) relates to the method for producing a particle according to the disclosure (26) or (27), wherein

the step 2 includes mixing the component A connected to the compound (I) and the component B in the presence of a solvent.

The disclosure (29) relates to the method for producing a particle according to any one of the disclosures (26) to (28), wherein the step 3 includes collecting a particle from the dispersion obtained in the step 2 by centrifugation.

- Advantageous Effects of Invention

The disclosure can provide a particle in which filler is sufficiently dispersed in resin, as well as a composition, a molded body, and a method for producing a particle.

BRIEF DESCRIPTION OF DRAWINGS

FIG. 1 shows a micrograph showing the dispersion state of Example 1.

FIG. 2 shows a micrograph showing the dispersion state of Example 2.

FIG. 3 shows a micrograph showing the dispersion state of Comparative Example 1.

FIG. 4 shows a micrograph showing the dispersion state of Example 3.

FIG. 5 shows a micrograph showing the dispersion state of Example 4.

FIG. 6 shows a micrograph showing the dispersion state of Example 5.

DESCRIPTION OF EMBODIMENTS

The "organic group" herein means a group containing at least one carbon atom or a group formed by removing one hydrogen atom from an organic compound.
Examples of the "organic group" include

an alkyl group optionally containing at least one substituent,
an alkenyl group optionally containing at least one substituent,
an alkynyl group optionally containing at least one substituent,
a cycloalkyl group optionally containing at least one substituent,
a cycloalkenyl group optionally containing at least one substituent,
a cycloalkadienyl group optionally containing at least one substituent,
an aryl group optionally containing at least one substituent, an aralkyl group optionally containing at least one substituent,
a non-aromatic heterocyclic group optionally containing at least one substituent,
a heteroaryl group optionally containing at least one substituent,
a cyano group,
a formyl group,
RaO-,
RaCO-,
$RaSO_2$-,
RaCOO-,
RaNRaCO-,
RaCONRa-,
RaOCO-,
$RaOSO_2$-, and,
$RaNRbSO_2$-
wherein the Ra groups are each independently
an alkyl group optionally containing at least one substituent,
an alkenyl group optionally containing at least one substituent,
an alkynyl group optionally containing at least one substituent,
a cycloalkyl group optionally containing at least one substituent,

a cycloalkenyl group optionally containing at least one substituent,
a cycloalkadienyl group optionally containing at least one substituent,
an aryl group optionally containing at least one substituent,
an aralkyl group optionally containing at least one substituent,
a non-aromatic heterocyclic group optionally containing at least one substituent, or
a heteroaryl group optionally containing at least one substituent, and
the Rb groups are each independently H or an alkyl group optionally containing at least one substituent.

The organic group is preferably an alkyl group optionally containing at least one substituent.
The disclosure will be specifically described below.

<Particle>

The particle of the disclosure includes a high performance engineering plastic resin; a filler; and a compound (I) containing multiple groups (I) each represented by the following formula:

[Chem. 3]

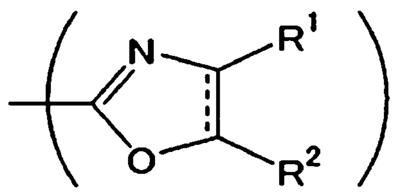

wherein $R^1$ and $R^2$ are the same as or different from each other and each represent a hydrogen atom or an organic group, and may be bound to each other to form a ring structure; and the double line depicted by a solid line and a dashed line represents a single bond or a double bond, the high performance engineering plastic resin being connected to the filler via the compound (I).
The particle of the disclosure has a structure in which the high performance engineering plastic resin is connected to the filler via the compound (I) so that the filler covers the high performance engineering plastic resin. Thus, the filler is prevented from aggregating and can be sufficiently dispersed in the high performance engineering plastic resin. As a result, even a small amount of the filler can modify the physical properties of the resin. For example, when the filler is a conductive filler, it can impart conductivity to the resin.
The high performance engineering plastic resin has a thermal decomposition temperature of preferably 330°C or higher, more preferably 350°C or higher, still more preferably 370°C or higher, while preferably 560°C or lower, more preferably 540°C or lower, still more preferably 520°C or lower.
The thermal decomposition temperature of the high performance engineering plastic resin is measured using a thermal analyzer STA7200 available from Hitachi High-Tech Science Corporation. The measurement is performed in an atmosphere purged with nitrogen at 200 mL/min. A sample in an amount of 10 mg is placed in an aluminum pan and maintained at 25°C for 10 minutes. Subsequently, the temperature is increased at a temperature increase rate of 10°C/min to 600°C. In this operation, a temperature (Td5) at which the mass of the sample has decreased by 5% from the initial mass is defined as a thermal decomposition temperature.
The high performance engineering plastic resin has a continuous use temperature of preferably 140°C or higher, more preferably 160°C or higher, still more preferably 170°C or higher. The upper limit is not limited, and the higher, the better. For example, the continuous use temperature may be 260°C.
The term "continuous use temperature" herein refers to a temperature at which the physical property value has decreased by 50% from the initial value during standing still in the air at a specific temperature for 40,000 hours and is measured in conformity with UL746B.
The high performance engineering plastic resin preferably includes at least one selected from the group consisting of a fluororesin, a liquid crystal polymer, polyetherimide, polyphenylene sulfide, polyaryletherketone, polysulfone, and polyethersulfone, more preferably includes at least one selected from the group consisting of a fluororesin, a liquid crystal polymer, polyaryletherketone, and polyethersulfone, still more preferably includes a fluororesin.
Examples of the fluororesin include polytetrafluoroethylene (PTFE), a tetrafluoroethylene (TFE)/perfluoro(alkyl vinyl ether) (PAVE) copolymer (PFA), a TFE/hexafluoropropylene (HFP) copolymer (FEP), an ethylene (Et)/TFE copolymer (ETFE), an Et/TFE/HFP copolymer (EFEP), polychlorotrifluoroethylene (PCTFE), a chlorotrifluoroethylene

(CTFE)/TFE copolymer, a CTFE/TFE/PAVE copolymer, and an Et/CTFE copolymer.

The fluororesin is preferably a perfluororesin, more preferably at least one selected from the group consisting of polytetrafluoroethylene (PTFE), a tetrafluoroethylene (TFE)/perfluoro(alkyl vinyl ether) (PAVE) copolymer (PFA), and a tetrafluoroethylene (TFE)/hexafluoropropylene (HFP) copolymer (FEP), still more preferably at least one selected from the group consisting of PFA and FEP, particularly preferably FEP.

The PTFE may be a TFE homopolymer consisting only of a tetrafluoroethylene (TFE) unit or may be a modified PTFE containing a TFE unit and a modifying monomer unit based on a modifying monomer copolymerizable with TFE.

The modifying monomer may be any monomer copolymerizable with TFE, and examples thereof include a perfluoroolefin such as hexafluoropropylene (HFP); a chlorofluoroolefin such as chlorotrifluoroethylene (CTFE); a hydrogen-containing fluoroolefin such as trifluoroethylene and vinylidene fluoride (VdF); a perfluorovinyl ether; a perfluoroalkyl allyl ether; a (perfluoroalkyl)ethylene; and ethylene. One type or two or more types of modifying monomers may be used.

The perfluorovinyl ether is not limited, and may be, for example, an unsaturated perfluoro compound represented by the following formula (1):

$$CF_2=CF\text{-}ORf \qquad (1)$$

wherein Rf represents a perfluoro organic group. The term "perfluoro organic group" herein means an organic group in which all hydrogen atoms bonded to any carbon atom are replaced by fluorine atoms. The perfluoro organic group may contain an ether oxygen.

Examples of the perfluorovinyl ether include a perfluoro(alkyl vinyl ether) (PAVE) represented by the formula (1) wherein Rf represents a C1-C10 perfluoroalkyl group. The perfluoroalkyl group preferably has 1 to 5 carbon atoms.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group. Preferred is perfluoro(propyl vinyl ether) (PPVE) wherein the perfluoroalkyl group is a perfluoropropyl group.

Examples of the perfluorovinyl ether further include those represented by the formula (1) wherein Rf is a C4-C9 perfluoro(alkoxyalkyl) group, those represented by the formula (1) wherein Rf is represented by the following formula:

[Chem. 4]

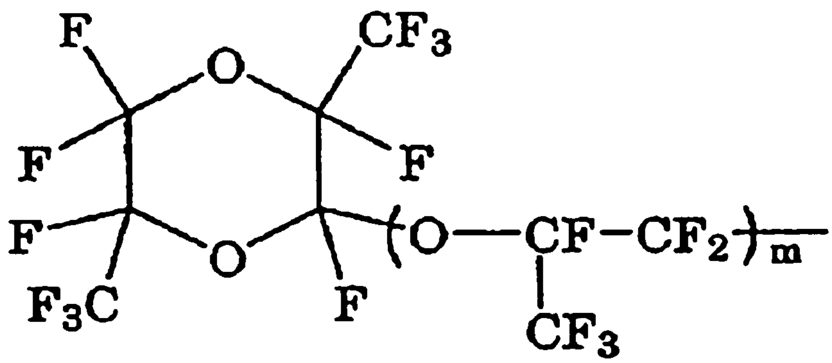

wherein m is 0 or an integer of 1 to 4; and those represented by the formula (1) wherein Rf is a group represented by the following formula:

[Chem. 5]

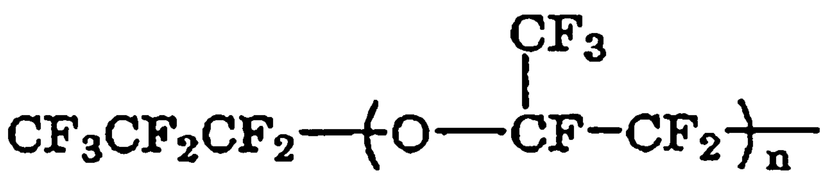

wherein n is an integer of 1 to 4.

Examples of the (perfluoroalkyl)ethylene include, but are not limited to, (perfluorobutyl)ethylene (PFBE), (perfluorohexyl)ethylene (PFHE), and (perfluorooctyl)ethylene.

The modifying monomer in the modified PTFE preferably includes at least one selected from the group consisting

of HFP, CTFE, VdF, PPVE, PFBE, and ethylene, more preferably at least one selected from the group consisting of HFP and CTFE.

In the modified PTFE, the amount of the modifying monomer unit is preferably in the range of 0.00001 to 1.0% by mass. The lower limit of the amount of the modifying monomer unit is more preferably 0.0001% by mass, still more preferably 0.001% by mass, even more preferably 0.005% by mass, further preferably 0.010% by mass, particularly preferably 0.030% by mass. The upper limit of the amount of the modifying monomer unit is preferably 0.90% by mass, more preferably 0.50% by mass, still more preferably 0.40% by mass, even more preferably 0.30% by mass.

The term "modifying monomer unit" herein means a moiety that is part of the molecular structure of the modified PTFE and is derived from a modifying monomer.

The PTFE preferably has a melting point of 324°C to 360°C. The melting point of PTFE means the first melting point. The first melting point is the temperature corresponding to the maximum value in a heat-of-fusion curve obtained by heating a PTFE that has no history of being heated up to a temperature of 300°C or higher, at a temperature increase rate of 10°C/min using a differential scanning calorimeter (DSC).

The PTFE preferably has a standard specific gravity (SSG) of 2.130 to 2.280. The standard specific gravity is more preferably 2.220 or lower, still more preferably 2.200 or lower, while it is preferably 2.140 or higher, more preferably 2.150 or higher. The SSG is measured by a water displacement method in conformity with ASTM D-792 using a sample molded in conformity with ASTM D 4895-89.

The PTFE preferably has non-melt secondary processibility. The non-melt secondary processibility means a property that the melt flow rate cannot be measured at a temperature higher than the crystallization melting point in conformity with ASTM D-1238 and D-2116.

The PFA is preferably, but is not limited to, a copolymer having a molar ratio of the TFE unit to the PAVE unit (TFE unit/PAVE unit) of 70/30 or more and less than 99/1, more preferably 70/30 or more and 98.9/1.1 or less, still more preferably 80/20 or more and 98.9/1.1 or less. The PFA is also preferably a copolymer containing 0.1 to 10 mol% of a monomer unit derived from a monomer copolymerizable with TFE and PAVE (a copolymer in which the sum of the TFE unit and the PAVE unit is 90 to 99.9 mol%), more preferably 0.1 to 5 mol% of a monomer unit derived from a monomer copolymerizable with TFE and PAVE, particularly preferably 0.2 to 4 mol% of a monomer unit derived from a monomer copolymerizable with TFE and PAVE.

Examples of the monomer copolymerizable with TFE and PAVE include HFP, a vinyl monomer represented by the formula (I): $CZ^1Z^2=CZ^3(CF_2)_nZ^4$ (wherein $Z^1$, $Z^2$, and $Z^3$ are the same as or different from each other and each represent a hydrogen atom or a fluorine atom; $Z^4$ represents a hydrogen atom, a fluorine atom, or a chlorine atom; and n represents an integer of 2 to 10), an alkyl perfluorovinyl ether derivative represented by the formula (II): $CF_2=CF\text{-}OCH_2\text{-}Rf^1$ (wherein $Rf^1$ represents a C1-C5 perfluoroalkyl group), and an allyl ether monomer represented by the formula (X): $CZ^5Z^6=CZ^7\text{-}CZ^8Z^9\text{-}O\text{-}Rf^4$ (wherein $Z^5$, $Z^6$, and $Z^7$ are the same as or different from each other and each represent a hydrogen atom, a chlorine atom, or a fluorine atom; $Z^8$ and $Z^9$ each represent a hydrogen atom or a fluorine atom; and $Rf^4$ represents a C1-C5 perfluoroalkyl group). Examples of the allyl ether monomer include $CH_2=CFCF_2\text{-}O\text{-}Rf^4$, $CF_2=CFCF_2\text{-}O\text{-}Rf^4$ (perfluoroalkyl allyl ether), $CF_2=CFCH_2\text{-}O\text{-}Rf^4$, and $CH_2=CHCF_2\text{-}O\text{-}Rf^4$ (in the formulas, $Rf^4$ is the same as that in the formula (X)).

Examples of the monomer copolymerizable with TFE and PAVE further include unsaturated monocarboxylic acids, unsaturated dicarboxylic acids, and acid anhydrides of unsaturated dicarboxylic acids, such as itaconic acid, itaconic anhydride, citraconic anhydride, and 5-norbornene-2,3-dicarboxylic anhydride.

The PFA preferably has a melting point of 180°C or higher and lower than 324°C, more preferably 230°C to 320°C, still more preferably 280°C to 320°C.

The melting point of the PFA refers to a temperature corresponding to the maximum value in a heat-of-fusion curve obtained by a measurement using a differential scanning calorimeter (DSC) at a temperature increase rate of 10°C/min.

The FEP is preferably, but is not limited to, a copolymer having a molar ratio of the TFE unit to the HFP unit (TFE unit/HFP unit) of 70/30 or more and less than 99/1, more preferably 70/30 or more and 98.9/1.1 or less, still more preferably 80/20 or more and 98.9/1.1 or less. The FEP is also preferably a copolymer containing 0.1 to 10 mol% of a monomer unit derived from a monomer copolymerizable with TFE and HFP (a copolymer in which the sum of the TFE unit and the HFP unit is 90 to 99.9 mol%), more preferably 0.1 to 5 mol% of a monomer unit derived from a monomer copolymerizable with TFE and HFP, particularly preferably 0.2 to 4 mol% of a monomer unit derived from a monomer copolymerizable with TFE and HFP.

Examples of the monomer copolymerizable with TFE and HFP include PAVE, a monomer represented by the formula (X), and an alkyl perfluorovinyl ether derivative represented by the formula (II). Examples of the monomer copolymerizable with TFE and HFP further include unsaturated monocarboxylic acids, unsaturated dicarboxylic acids, acid anhydrides of unsaturated dicarboxylic acids, such as itaconic acid, itaconic anhydride, citraconic anhydride, and 5-norbornene-2,3-dicarboxylic anhydride.

The FEP preferably has a melting point of 150°C or higher and lower than 324°C, more preferably 200°C to

320°C, still more preferably 240°C to 320°C.

The melting point of the FEP refers to a temperature corresponding to the maximum value in a heat-of-fusion curve obtained by a measurement using a differential scanning calorimeter (DSC) at a temperature increase rate of 10°C/min.

The ETFE is preferably a copolymer having a molar ratio of the TFE unit to the ethylene unit (TFE unit/ethylene unit) of 20/80 or more and 90/10 or less, more preferably 37/63 or more and 85/15 or less, still more preferably 38/62 or more and 80/20 or less. The ETFE may also be a copolymer of TFE, ethylene, and a monomer copolymerizable with TFE and ethylene. The ETFE preferably contains 0.1 to 10 mol% of a monomer unit derived from a monomer copolymerizable with TFE and ethylene (a copolymer in which the sum of the TFE unit and the ethylene unit is 90 to 99.9 mol%), more preferably 0.1 to 5 mol% of a monomer unit derived from a monomer copolymerizable with TFE and ethylene, particularly preferably 0.2 to 4 mol% of a monomer unit derived from a monomer copolymerizable with TFE and ethylene.

Examples of the monomer copolymerizable with TFE and ethylene include monomers represented by the following formulas:
$CH_2=CX^1Rf^2$, $CF_2=CFRf^2$, $CF_2=CFORf^2$, and $CH_2=C(Rf^2)_2$ (wherein $X^1$ represents a hydrogen atom or a fluorine atom, and $Rf^2$ represents a fluoroalkyl group optionally containing an ether bond), and a monomer represented by the formula (X). Of these, preferred are fluorine-containing vinyl monomers represented by $CF_2=CFRf^2$, $CF_2=CFORf^2$, and $CH_2=CX^1Rf^2$ and a monomer represented by the formula (X). More preferred are HFP, perfluoro(alkyl vinyl ether) represented by $CF_2=CF-ORf^3$ (wherein $Rf^3$ represents a C1-C5 perfluoroalkyl group), perfluoro(alkyl allyl ether) represented by $CF_2=CF-CF_2-O-Rf^f$ (wherein $Rf^4$ represents a C1-C5 perfluoroalkyl group), and fluorine-containing vinyl monomers represented by $CH_2=CX^1Rf^2$ (wherein $Rf^2$ represents a C1-C8 fluoroalkyl group). Examples of the monomer copolymerizable with TFE and ethylene also include unsaturated monocarboxylic acids, unsaturated dicarboxylic acids, and acid anhydrides of unsaturated dicarboxylic acids, such as itaconic acid, itaconic anhydride, citraconic anhydride, and 5-norbornene-2,3-dicarboxylic anhydride.

The ETFE preferably has a melting point of 140°C to lower than 324°C, more preferably 160°C to 320°C, still more preferably 195°C to 320°C.

The melting point of the ETFE refers to a temperature corresponding to the maximum value in a heat-of-fusion curve obtained by a measurement using a differential scanning calorimeter (DSC) at a temperature increase rate of 10°C/min.

The amounts of the monomer units in the polymer described above can be calculated by appropriate combinations of NMR, FT-IR, elemental analysis, and X-ray fluorescence analysis depending on the types of the monomers.

The fluororesin may have 100 to 2,000 unstable end groups per $10^6$ carbon atoms in the main chain. Typical examples of unstable end groups include -COF and - COOH. The number of unstable end groups refers to a total number of the groups.

The number of unstable end groups can be determined by infrared spectroscopy. Specifically, first, the fluororesin is melt-extruded to form a film with a thickness of 0.25 to 0.3 mm. The film is analyzed by Fourier transform infrared spectroscopy to provide an infrared absorption spectrum of the fluororesin, and a difference spectrum is obtained between the resulting spectrum and a base spectrum without unstable end groups owing to complete fluorination treatment. Based on the absorption peaks of specific unstable end groups appearing in this difference spectrum, the number N of unstable end groups per $10^6$ carbon atoms in the fluororesin is calculated using the following formula (A).

$$N = I \times K/t \qquad (A)$$

I: Absorbance
K: Correction coefficient
t: Thickness of film (mm)

The liquid crystal polymer is not limited and may be a polymer with a liquid crystal transition temperature (i.e., melting point) of 180°C to 380°C. It is preferably a thermotropic liquid crystal polymer which becomes a liquid crystal, such as nematic, when heated. Examples thereof include

a type I liquid crystal polymer (e.g., a biphenol/benzoic acid/p-hydroxy benzoic acid (POB) copolymer),
a type II liquid crystal polymer (e.g., a hydroxy naphthoic acid (HNA)/POB copolymer), and
a type III liquid crystal polymer (e.g., a POB/ethylene terephthalate copolymer). In view of mixing temperature and liquid crystal transition temperature, preferred among these is at least one selected from the group consisting of a type I liquid crystal polymer and a type II liquid crystal polymer, more preferred is a type II liquid crystal polymer.

The liquid crystal polymer preferably has a melting point of 280°C or higher, more preferably 310°C or higher, while preferably 380°C or lower, more preferably 350°C or lower.

Examples of usable polyetherimide include polyetherimide containing an imide bond and an ether bond in the molecule.

The polyetherimide preferably has a glass transition temperature of 180°C or higher, more preferably 200°C or higher, while preferably 300°C or lower, more preferably 280°C or lower.

Examples of usable polyphenylene sulfide include resins including a structural unit represented by the following formula. The percentage of the structural unit is preferably 70 mol% or more.

-(Ph-S)-

In the formula, Ph represents a phenylene group. Examples of the phenylene group include p-phenylene, m-phenylene, o-phenylene, alkyl-substituted phenylene, phenyl-substituted phenylene, halogen-substituted phenylene, amino-substituted phenylene, amide-substituted phenylene, p,p'-diphenylene sulfone, p,p'-biphenylene, and p,p'-biphenylene ether. Of these, p-phenylene is preferred.

The polyphenylene sulfide preferably has a melting point of 240°C or higher, more preferably 270°C or higher, while preferably 380°C or lower, more preferably 350°C or lower.

Examples of the polyaryletherketone include polyether ketone (PEK), polyether ether ketone (PEEK), and polyether ketone ketone (PEKK). Of these, PEEK is preferred.

The polyaryletherketone preferably has a melting point of 320°C or higher, more preferably 340°C or higher, while preferably 400°C or lower, more preferably 380°C or lower.

The polysulfone is not limited, and those generally used are usable.

The polysulfone preferably has a glass transition temperature of 180°C or higher, more preferably 200°C or higher, still more preferably 220°C or higher, while preferably 300°C or lower, more preferably 280°C or lower, still more preferably 260°C or lower.

The polyethersulfone is not limited, and those generally used are usable.

The polyethersulfone preferably has a glass transition temperature of 180°C or higher, more preferably 200°C or higher, still more preferably 220°C or higher, while preferably 300°C or lower, more preferably 280°C or lower, still more preferably 260°C or lower.

The melting points of the liquid crystal polymer, the polyetherimide, the polyphenylene sulfide, and the polyaryletherketone each refer to a temperature corresponding to the maximum value in a heat-of-fusion curve obtained by a measurement using a differential scanning calorimeter (DSC) at a temperature increase rate of 10°C/min.

The glass transition temperatures of the polyetherimide, the polysulfone, and the polyethersulfone can be determined as follows. Specifically, using a differential scanning calorimeter (DSC822e available from Mettler-Toledo International Inc.), 10 mg of a sample is heated at a temperature increase rate of 10°C/min to give a DSC curve, and a temperature is read at the intermediate point of two intersections between each of the extension lines of the base lines before and after the secondary transition of the DSC curve and the tangent line at the inflection point of the DSC curve. The temperature is determined as a glass transition temperature.

The amount of the high performance engineering plastic resin in the particle of the disclosure is preferably 60% by mass or more, more preferably 70% by mass or more, still more preferably 80% by mass or more, while preferably 99.999% by mass or less, more preferably 99.99% by mass or less, still more preferably 99.9% by mass or less.

Specific examples of the filler include inorganic compounds such as silica (specifically, for example, crystalline silica, fused silica, spherical fused silica), titanium oxide, zirconium oxide, zinc oxide, tin oxide, silicon nitride, silicon carbide, boron nitride, calcium carbonate, calcium silicate, potassium titanate, aluminum nitride, indium oxide, alumina, antimony oxide, cerium oxide, magnesium oxide, iron oxide, and tin-doped indium oxide (ITO); minerals such as montmorillonite, talc, mica, boehmite, kaolin, smectite, xonotlite, vermiculite, and sericite; carbon materials such as carbon black, acetylene black, ketjen black, and carbon nanotubes; metal hydroxides such as aluminum hydroxide and magnesium hydroxide; and glasses such as glass beads, glass flakes, and glass balloons. Each of these may be used alone, or two or more of these may be used in combination. In particular, carbon materials are preferred, and carbon nanotubes are more preferred. The use of a carbon material as a conductive filler, can make the particle of the disclosure a conductive particle.

The filler is preferably a nanofiller. The term "nanofiller" refers to a filler that is a nanomaterial having at least one dimension (preferably two dimensions, more preferably three dimensions) among size dimensions in the range of about 0.1 nm to 200 nm or a filler that is a nanostructure composed of nanomaterials.

Nanofillers have high aggregation properties and tend to be difficult to disperse in a resin. The composition of the disclosure is particularly effective for nanofillers having such properties.

The nanofiller is preferably a carbon nanofiller. Specific examples of the carbon nanofiller include carbon nanofibers, carbon nanohorns, carbon nanocones, carbon nanotubes, carbon nanostructures, carbon nanocoils, carbon

microcoils, carbon nanowalls, carbon nanochaplets, fullerene, carbon black, graphite, graphene, carbon nanoflakes, and derivatives thereof. One or two or more types of these may be used. Carbon nanotubes (CNT) are preferred among these.

The carbon nanotubes have an average diameter of preferably 0.1 nm or more, more preferably 0.5 nm or more, still more preferably 1 nm or more, while preferably 200 nm or less, more preferably 100 nm or less, still more preferably 50 nm or less.

The diameter of the carbon nanotubes can be analyzed with a transmission electron microscope. An average of the diameters of 10 carbon nanotubes is determined as an average diameter.

The carbon nanotubes preferably include at least one selected from the group consisting of multilayer carbon nanotubes and monolayer carbon nanotubes.

The amount of the filler in the particle of the disclosure is preferably 0.001% by mass or more, more preferably 0.005% by mass or more, still more preferably 0.01% by mass or more, while preferably 30% by mass or less, more preferably 15% by mass or less, still more preferably 10% by mass or less, further more preferably 5% by mass or less, further more preferably 1% by mass or less, particularly preferably 0.5% by mass or less.

The compound (I) may be any compound containing multiple groups (I). It may be a polymer, an oligomer, or a low molecular weight compound other than the polymer and the oligomer.

The compound (I) which is a low molecular weight compound is preferably a compound containing a benzene ring or a naphthalene ring. The structure of the compound (I) which is a polymer or an oligomer is not limited and may optionally contain a benzene ring or a naphthalene ring.

The organic group for $R^1$ and $R^2$ in the group (I) is as described above.

Examples of the ring structure formed by binding of $R^1$ and $R^2$ include a cyclohexane ring and a benzene ring.

$R^1$ and $R^2$ are both preferably hydrogen atoms to form stable amide ester bonds through reaction with carboxy groups which have been introduced to many resins. The double line depicted by a solid line and a dashed line is preferably a single bond. Specifically, the group (I) is preferably an oxazoline group, and the compound (I) is preferably an oxazoline compound.

Specific examples of the oxazoline compound include low molecular weight oxazoline compounds such as 2-vinyl-2-oxazoline, 4-methyl-2-vinyl-2-oxazoline, 5-methyl-2-vinyl-2-oxazoline, 4-ethyl-2-vinyl-2-oxazoline, 5-ethyl-2-vinyl-2-oxazoline, 4,4-dimethyl-2-vinyl-2-oxazoline, 4,4-diethyl-2-vinyl-2-oxazoline, 4,5-dimethyl-2-vinyl-2-oxazoline, 4,5-diethyl-2-vinyl-2-oxazoline, 2-isopropenyl-2-oxazoline, 4-methyl-2-isopropenyl-2-oxazoline, 5-methyl-2-isopropenyl-2-oxazoline, 4-ethyl-2-isopropenyl-2-oxazoline, 5-ethyl-2-isopropenyl-2-oxazoline, 4,4-dimethyl-2-isopropenyl-2-oxazoline, 4,4-diethyl-2-isopropenyl-2-oxazoline, 4,5-dimethyl-2-isopropenyl-2-oxazoline, 4,5-diethyl-2-isopropenyl-2-oxazoline, 1,3-phenyl bis oxazoline [1,3-PBO], and 1,4-phenyl bis oxazoline [1,4-PBO]; and oxazoline polymers such as homopolymers of the above-described low molecular weight oxazoline compounds (e.g., poly-2-vinyl-2-oxazoline [Pvozo], poly-2-isopropenyl-2-oxazoline [Pipovo]) and copolymers of the above-described low molecular weight oxazoline compounds and other monomers. Each of these may be used alone, or two or more of these may be used in combination.

The oxazoline compound is preferably an oxazoline group-containing polymer because it can better connect the high performance engineering plastic resin with the filler. From the same point of view, the oxazoline group-containing polymer preferably includes at least one selected from the group consisting of a 2-vinyl-2-oxazoline-derived repeating unit and a 2-isopropenyl-2-oxazoline-derived repeating unit, more preferably includes at least one selected from the group consisting of Pvozo and Pipovo, still more preferably includes Pvozo.

The oxazoline group-containing polymer is also preferably a copolymer of 2-vinyl-2-oxazoline or 2-isopropenyl-2-oxazoline and any other monomer, more preferably a copolymer of 2-vinyl-2-oxazoline or 2-isopropenyl-2-oxazoline and an acrylic monomer, still more preferably a copolymer of 2-isopropenyl-2-oxazoline and an acrylic monomer.

The oxazoline group-containing polymer may have an oxazoline group at an end, on a side chain, or both an end and on a side chain. Preferably, it has an oxazoline group at least at an end.

The oxazoline group-containing polymer may have a branched structure. Such a branched oxazoline group-containing polymer may have an oxazoline group on the main chain, on a branched chain, or both on the main chain and a branched chain. Preferably, it has an oxazoline group at least on the main chain, more preferably at an end of the main chain.

The oxazoline group-containing polymer preferably has a molecular weight of 2,000 or more, more preferably 5,000 or more, still more preferably 10,000 or more, while preferably 400,000 or less, more preferably 300,000 or less, still more preferably 200,000 or less.

The molecular weight of the oxazoline group-containing polymer is the number average molecular weight (Mn), which can be determined based on the PS-equivalent average molecular weight obtained by GPC measurement.

Specific examples of the compound (I) other than oxazoline compounds include 1,4-bis(benzoxazole-2-yl) naphthalene [1,4-BBN].

The compound (I) contains multiple (two or more) groups (I). The number of the groups (I) is preferably 10 or more, more preferably 100 or more because such a compound (I) can better connect the high performance engineering

plastic resin with the filler. The upper limit is not limited. Generally, the upper limit is 1,000 or less.

The amount of the compound (I) in the particle of the disclosure is preferably 0.01% by mass or more, more preferably 0.05% by mass or more, still more preferably 0.1% by mass or more, while preferably 50% by mass or less, more preferably 30% by mass or less, still more preferably 10% by mass or less.

In the particle of the disclosure, the coverage of the high performance engineering plastic resin by the compound (I) is preferably 0.1% by mass or more, more preferably 0.5% by mass or more, still more preferably 1% by mass or more. The upper limit is not limited and may be 100% by mass. Generally, the upper limit is about 5% by mass.

The coverage of the high performance engineering plastic resin by the compound (I) is determined based on a calibration curve prepared by FT-IR to determine the coverage. Specifically, the coverage is determined by the following method.

PGME/compound (I) solutions are prepared by dissolving the compound (I) in propylene glycol monomethyl ether (PGME) such that the solutions respectively contain the compound (I) in an amount of 0.5% by mass, 1.0% by mass, 2.0% by mass, 2.5% by mass, and 3.0% by mass relative to the high performance engineering plastic resin. Each solution is mixed with the high performance engineering plastic resin, and the mixture is dried to collect a powder of the mixture of the high performance engineering plastic resin and the compound (I). The powder is analyzed by FT-IR to read the absorbance of the group (I) (1670 $cm^{-1}$ in the case of an oxazoline group). The absorbance is plotted on a graph with absorbance on the y axis and coverage (% by mass) on the x axis. An approximation line is drawn through the plotted points to generate a calibration curve.

The absorbance of the group (I) measured using a target sample by FT-IR as described above is substituted into the y value on the above calibration curve, and the corresponding x value is determined as the coverage (% by mass) of the high performance engineering plastic resin by the compound (I).

The particle of the disclosure may further include an additive. Examples of the additive include additives generally used in resins, such as a crosslinking agent, an antistatic agent, a heat resistance stabilizer, a foaming agent, a foam nucleating agent, an antioxidant, a surfactant, a photopolymerization initiator, an anti-wear agent, and a surface modifier.

The particle of the disclosure can be produced by, for example, the method for producing the particle of the disclosure described below.

<Composition>

The composition of the disclosure contains the particle of the disclosure.

The composition of the disclosure may be solid or liquid at 25°C. Preferably, it is solid at 25°C.

The amount of the particle of the disclosure in the composition of the disclosure is preferably 0.1% by mass or more, more preferably 1% by mass or more, still more preferably 10% by mass or more. The upper limit is not limited and may be 100% by mass.

The composition of the disclosure may be a dispersion containing the particle of the disclosure and a solvent. Any solvent may be used. The solvent may be water or an organic solvent such as an alcohol, an ether, or a pyrrolidone.

In this case, the amount of the particle of the disclosure in the composition of the disclosure (dispersion) is preferably 0.1% by mass or more, more preferably 1% by mass or more, still more preferably 10% by mass or more, while preferably 99% by mass or less, more preferably 80% by mass or less, still more preferably 50% by mass or less.

The composition of the disclosure may further contain an additive. Examples of usable additives include those described above for the particle of the disclosure.

<Molded body>

The molded body of the disclosure includes the composition of the disclosure. The molded body can be obtained by molding the composition of the disclosure. The molding may be performed by any method, including a usual method such as injection molding, blow molding, inflation molding, or vacuum/pressure molding.

The molded body of the disclosure is preferably used as a conductive material.

The term "conductive material" herein refers to a material having a volume resistivity of $1.0 \times 10^{10}$ $\Omega \cdot cm$ or less (preferably $1.0 \times 10^{7}$ $\Omega \cdot cm$ or less, more preferably $1.0 \times 10^{5}$ $\Omega \cdot cm$ or less). In an application to remove static electricity, the volume resistivity is preferably $10^{10}$ $\Omega \cdot cm$ or less. In an application requiring conductivity, the volume resistivity is preferably $10^{5}$ $\Omega \cdot cm$ or less. The lower limit is not limited and is preferably about $1.0 \times 10^{2}$ $\Omega \cdot cm$. The volume resistivity of the molded body of the disclosure is determined by the following method.

The particle is press-molded to obtain a cylindrical molded body (radius 6 mm, thickness (height) 100 to 500 $\mu m$). The pressing method may be either of cold press or hot press. The resistance of the molded body is measured by the four-point probe method, and the volume resistance value ($\Omega$) is calculated using the following expression.

$$\text{Volume resistance value } (\Omega) = \text{Voltage (V)/Current (I)}$$

Subsequently, the volume resistivity (Ω·cm) is calculated using the following expression.

Volume resistivity (Ω·cm) = Volume resistance value (Ω) × Cross-sectional area of cylinder ($cm^2$)/Thickness of cylinder (cm)

Here, the cross-sectional area of the cylinder refers to the area of a cross-sectional plane perpendicular to the height direction.

The molded body of the disclosure as a conductive material may be used in any application. The molded body can be used in a wide range of applications, including an antistatic tube used in, for example, a fluid-carrying pipe, a nozzle, a shower head, a spray nozzle, a rotating nozzle, a liquid discharge port, a piping component, a liquid transfer tube, a liquid transfer joint, or a lining pipe; a fluid transfer device which includes the antistatic tube; a semiconductor manufacturing system, a pharmaceutical manufacturing system, a pharmaceutical transfer system, a chemical manufacturing system, and a chemical transfer system which include the fluid transfer device; and a heater cable.

In the molded body of the disclosure, preferably, not more than 20 aggregates with a width of 50 μm or more are observed in an area of 0.3 $mm^2$ in an optical microscopic image. The number of the aggregates is more preferably not more than 10, still more preferably not more than 5, particularly preferably not more than 1. The lower limit is not limited and may be 0.

The number of the aggregates is measured by the following method. The particle is press-molded to obtain a cylindrical molded body (radius 6 mm, thickness (height) 100 to 500 μm). The pressing method may be either of cold press or hot press. The molded body is observed with an optical microscope. The obtained image is subjected to binarization processing to calculate the area of the filler, and the number of aggregates with a size of 50 μm or more is analyzed.

The molded body of the disclosure is preferably used as a dielectric material, in particular, a low dielectric substrate material (e.g., insulating material).

The term "low dielectric substrate material" herein refers to a material having a relative permittivity at 25°C and 10 GHz of 5.0 or lower and a dissipation factor at 25°C and 10 GHz of 0.003 or lower; more preferably a material having a relative permittivity at 25°C and 10 GHz of 4.0 or lower and a dissipation factor at 25°C and 10 GHz of 0.002 or lower; still more preferably a material having a relative permittivity at 25°C and 10 GHz of 3.5 or lower and a dissipation factor at 25°C and 10 GHz of 0.0012 or lower.

The molded body of the disclosure as a dielectric material may be used in any application. The molded body can be used in a wide range of applications, including electrical and electronic parts such as a connector, a socket, a relay part, a coil bobbin, an optical pickup, an oscillator, a printed wiring board, and a computer-related part; semiconductor manufacturing process-related parts such as an IC tray and a wafer carrier; household electric appliance parts for products such as a VTR, a television, an iron, an air conditioner, a stereo, a vacuum cleaner, a refrigerator, a rice cooker, and a lighting equipment; lighting equipment parts such as a lamp reflector and a lamp holder; audio product parts such as a compact disc and a speaker; communication equipment parts such as an optical cable ferrule, a telephone part, a facsimile part, and a modem; copier-related parts such as a separation claw and a heater holder; mechanical parts such as an impeller, a fan, a cog, a gear, a bearing, a motor part, and a housing; automotive parts such as an automotive mechanical part, an engine part, an engine room internal part, an electrical component, and an interior part; cooking utensils such as a microwave cooking pot and a heat-resistant tableware; building materials and civil construction materials such as a heat and sound insulation material (e.g., a floor material, a wall material), a supporting material (e.g., a beam, a pillar), and a roofing material; components for aircraft, spacecraft, or space equipment, components for radiation facilities (e.g., nuclear reactors), marine facility component, washing jigs, optical instrument parts, valves, pipes, nozzles, filters, membranes, medical device parts and medical materials, sensor parts, and sanitary products.

The molded body of the disclosure may be in the form of a laminate with metal foil. Such a laminate is suitably used as a circuit board, in particular, a printed circuit board, a laminated circuit board (multilayer circuit board), or a high-frequency circuit board.

The high frequency circuit board is a circuit board that is operable in a high frequency band. The high frequency band may be a band of 1 GHz or higher, preferably a band of 3 GHz or higher, more preferably a band of 5 GHz or higher. The upper limit may be, but is not limited to, a band of 100 GHz or lower.

Examples of the metal of the metal foil include aluminum, iron, silver, gold, and ruthenium. Alloys of these metals are also usable. Copper is preferred among these. Examples of usable copper include rolled copper and electrolytic copper.

The laminate preferably has a thickness of 10 μm to 1,000 μm. The molded body of the disclosure in the laminate preferably has a thickness of 1 μm to 100 μm.

The laminate and the molded body are each preferably in the form of a sheet with a substantially constant

thickness. When the sheet includes portions with different thicknesses, the thickness refers to an average of the thicknesses measured at 10 points equally spaced along the longitudinal direction.

<Method for producing particle>

The method for producing a particle of the disclosure includes a step 1 of mixing a component A and a compound (I) containing multiple groups (I), a step 2 of mixing a mixture obtained in the step 1 and a component B in the presence of a solvent, and a step 3 of collecting a particle from a dispersion obtained in the step 2, the component A including one of a high performance engineering plastic resin and a filler, while the component B including the other.

According to the production method of the disclosure, one of a high performance engineering plastic resin and a filler is connected to a compound (I) in the step (1), and the other of the high performance engineering plastic resin and the filler is connected to the compound (I) in the step 2. Then, a particle is collected from the dispersion in the step 3. Thus, a particle in which the high performance engineering plastic resin and the filler are connected via the compound (I) is efficiently produced.

(Step 1)

In the step 1, the component A is mixed with the compound (I) containing multiple groups (I). As a result, functional groups on the surface of the component A, such as a carboxy group, a phenolic OH group, and a thiol group, bind to the groups (I) of the compound (I), so that the component A is connected to the compound (I).

Although the component A may be either of the high performance engineering plastic resin or the filler, it is preferably the high performance engineering plastic resin.

Both the high performance engineering plastic resin and the filler may be added as the component A. In this case, preferably, the amount of one of them in the component A is 95% by mass or more, and more preferably, the amount of the high performance engineering plastic resin in the component A is 95% by mass or more.

The high performance engineering plastic resin, the filler, and the compound (I) are as described above for the particle of the disclosure.

The amount of the compound (I) relative to the amount of the component A is preferably 0.01% by mass or more, more preferably 0.05% by mass or more, still more preferably 0.1% by mass or more, while preferably 50% by mass or less, more preferably 30% by mass or less, still more preferably 10% by mass or less.

The mixing in the step 1 may be performed in the presence of a solvent, though the solvent is not essential. Any solvent may be used. The solvent may be water or an organic solvent such as an alcohol, an ether, or a pyrrolidone and is preferably an organic solvent, more preferably an ether.

The amount of the solvent is preferably equal to the total mass of the component A and the compound (I) or more, more preferably 5 times the total mass or more, still more preferably 10 times the total mass or more, while preferably 500 times the total mass or less, more preferably 200 times the total mass or less, still more preferably 100 times the total mass or less.

The mixing in the step 1 may be performed by any method. The mixing method may be appropriately selected depending on the types and amounts of the materials, for example. For example, the mixing in the presence of a solvent may be performed by ultrasonication or using a homogenizer.

The duration of the mixing is preferably 5 minutes to 48 hours. The mixing temperature is preferably room temperature to 200°C.

The mixing in the step 1 may be performed once or multiple times. The materials may be added all at once or in separate portions. The same applies to the mixing in the step 2 described below.

In the case where the mixing in the step 1 is performed in the presence of a solvent, the dispersion obtained by the mixing may be directly used in the step 2 or the dispersion may be used in the step 2 after removing the solvent from the dispersion by centrifugation or other treatments.

(Step 2)

In the step 2, the mixture (including the component A connected to the compound (I)) obtained in the step 1 is mixed with the component B in the presence of a solvent. As a result, functional groups on the surface of the component B, such as a carboxy group, a phenolic OH group, and a thiol group, bind to the groups (I) of the compound (I) in the mixture obtained in the step 1, so that the component A is connected to the component B via the compound (I).

The step 2 may be a step of mixing the component A connected to the compound (I) with the component B in the presence of a solvent.

Although the component B may be either of the high performance engineering plastic resin or the filler, it is preferably the filler.

Both the high performance engineering plastic resin and the filler may be added as the component B. In this case, one of them present in an amount of 5% by mass or less in the component A is preferably contained in an amount of 95% by mass or more in the component B. More preferably, the filler is contained in an amount of 95% by mass or more in the component B.

The amount of the component B relative to the amount of the component A added in the step 1 is preferably 0.001% by mass or more, more preferably 0.01% by mass or more, still more preferably 0.1% by mass or more, while preferably 30% by mass or less, more preferably 20% by mass or less, still more preferably 10% by mass or less.

As in the step 1, the solvent which may be used in the step 2 may be water or an organic solvent such as an alcohol, an ether, or a pyrrolidone and is preferably an organic solvent, more preferably a pyrrolidone. One solvent may be used alone, or a mixture of two or more solvents may be used.

The solvent may contain a dispersion stabilizer. The necessity or type of the dispersion stabilizer can be determined depending on the filler used. For example, when carbon nanotubes with a large diameter are used, no dispersion stabilizer is necessary.

The amount of the solvent is preferably equal to the total of the mass of the mixture (solid content for a dispersion) obtained in the step 1 and the mass of the component B or more, more preferably 5 times the total mass or more, still more preferably 10 times the total mass or more, while preferably 500 times the total mass or less, more preferably 200 times the total mass or less, still more preferably 100 times the total mass or less.

As in the step 1, the mixing in the step 2 may be performed by any method, and the mixing method may be appropriately selected depending on the types and amounts of the materials, for example.

The duration of the mixing is preferably 5 minutes to 48 hours. The mixing temperature is preferably room temperature to 200°C.

(Step 3)

In the step 3, a particle is collected from the dispersion obtained in the step 2. The particle may be collected by any method, for example, centrifugation.

The centrifugation may be performed under any condition in which a precipitate can be separated from a solvent. For example, the centrifugation may be performed at 1,000 to 50,000 rpm for 1 to 60 minutes. After the centrifugation, the precipitate is dried to collect a particle. The precipitate may be washed with methanol or the like before it is dried.

The suitable embodiments described above for the particle of the disclosure are also applicable to the particle obtained by the production method of the disclosure.

Although some embodiments are described above, it will be understood that various changes in the embodiments and the details can be made without departing from the gist and scope of the Claims.

## EXAMPLES

The disclosure will be described in more detail with reference to examples, but the disclosure is not limited only to these examples.

The materials used in examples are as follows.

(High performance engineering plastic resin)

FEP (TFE unit/HFP unit (molar ratio) = 88.0/12.0, melting point: 260°C, thermal decomposition temperature: 430°C, continuous use temperature: 200°C)

PFA (TFE unit/PPVE unit (molar ratio) = 97.9/2.1, melting point: 300°C, thermal decomposition temperature: 430°C, continuous use temperature: 200°C)

PES (available from Mitsui Fine Chemicals, Inc., glass transition temperature: 225°C, thermal decomposition temperature: 465°C, continuous use temperature: 190°C)

LCP (copolymer of p-hydroxy benzoic acid, biphenol, and terephthalic acid, melting point: 343°C, thermal decomposition temperature: 520°C, continuous use temperature: 240°C)

PEEK (available from Solvay, melting point: 339°C, thermal decomposition temperature: 553°C, continuous use temperature: 240°C)

(Filler)

MWCNT (multilayer carbon nanotubes, average diameter: 9 nm)
SWCNT (monolayer carbon nanotubes, average diameter: 2 nm)

(Compound (I) (oxazoline compound))

Pvozo (poly-2-vinyl-2-oxazoline, molecular weight: 48,000)
WS300 ("POCROS WS300" available from Nippon Shokubai Co., Ltd., copolymer of 2-isopropenyl-2-oxazoline and acrylate, molecular weight: 40,000)

(Solvent)

PGME (propylene glycol monomethyl ether)
PVP (polyvinylpyrrolidone)
NMP (N-methyl-2-pyrrolidone)
Water

Example 1

<Preparation of sample>

(Step 1)

A 50 cc sample vial was charged with 3 g of an FEP aggregate and 30 g of PGME. The aggregate was finely crushed with a spatula and then subjected to ultrasonic treatment for more than 15 minutes with an ultrasonic homogenizer. Using a concentrated solution of Pvozo in PGME, Pvozo was added to a concentration of 4% by mass relative the FEP. The mixture was subjected to ultrasonic treatment for more than 10 minutes at room temperature using a bath-type ultrasonicator. A stir bar was put therein, and a reaction was carried out at 100°C for 24 hours in an oil bath. Thereafter, the sample was taken out of the oil bath and then subjected to centrifugal separation at 4,000 rpm for five minutes. After removing the supernatant (PGME), 10 g of methanol was added, followed by stirring with a spatula and then washing with methanol. The washed product was subjected to centrifugal separation at 4,000 rpm for five minutes to remove methanol. This methanol washing operation (operation of adding methanol, centrifugation, and removing methanol) was repeated five times in total. The resulting product was dried with a vacuum dryer under a vacuum pressure of 1.33 kPa at 40°C for three hours, whereby an FEP/Pvozo powder was obtained.

(Step 2)

A 50 cc sample vial was charged with 1.2 g of the FEP/Pvozo powder and 10 g of NMP. Subsequently, ultrasonic treatment was performed for more than 15 minutes using a bath-type ultrasonicator. Using an MWCNT dispersion, MWCNT was added to a concentration of 0.1% by mass relative to the FEP/Pvozo powder. The mixture was subjected to ultrasonic treatment for more than 10 minutes at room temperature with a bath-type ultrasonicator. A stir bar was put therein, and a reaction was carried out at 100°C for two hours in an oil bath to obtain an FEP/Pvozo/MWCNT composite. Thereafter, the sample was taken out of the oil bath.

(Step 3)

The sample was centrifuged at 4,000 rpm for five minutes with a centrifuge to separate the FEP/Pvozo/MWCNT composite and the uncovering MWCNT. An NMP solvent in which the MWCNT was dispersed was removed with a pipette. After removing the supernatant (NMP), 10 g of methanol was added, followed by stirring with a spatula and then washing with methanol. This methanol washing operation (operation of adding methanol, centrifugation, and removing methanol) was repeated five times in total. The resulting product was dried with a vacuum dryer under a vacuum pressure of 1.33 kPa at 40°C for three hours, whereby a particle in which FEP was connected to MWCNT via the oxazoline compound was obtained.
The particle and the powder obtained in the step 1 were measured and evaluated by the methods described below.

<Coverage>

PGME/oxazoline compound solutions were prepared by dissolving an oxazoline compound (Pvozo) in PGME such that the solutions respectively contained the oxazoline compound in an amount of 0.5% by mass, 1.0% by mass, 2.0% by mass, 2.5% by mass, and 3.0% by mass relative to the high performance engineering plastic resin (FEP). Each solution was mixed with the high performance engineering plastic resin, and the mixture was dried to collect a powder of the mixture of the high performance engineering plastic resin and the oxazoline compound. The powder was analyzed by FT-IR to read the absorbance of the oxazoline group at 1670 $cm^{-1}$. The absorbance was plotted on a graph with absorbance on the y axis and coverage (% by mass) on the x axis. An approximation line was drawn through the plotted points to generate a calibration curve.

The absorbance of the oxazoline group measured using the powder obtained in the step 1 (FEP/Pvozo powder), which was a measurement target, by FT-IR as described above was substituted into the y value on the above calibration curve, and the corresponding x value was determined as the coverage (% by mass) of the high performance engineering plastic resin by the oxazoline compound.

<Volume resistivity>

The particles obtained in Examples 1 to 3 and Comparative Example 1 were each placed on a 6-mm-radius disc and subjected to cold press molding with a hand press at room temperature to obtain a cylindrical molded body (radius 6 mm, thickness (height) 100 to 500 μm). The resistance of the molded body was measured by the four-point probe method. The volume resistance value (Ω) was calculated using the expression below.

The particle obtained in Example 4 was subjected to hot press molding to obtain a molded body. Molding conditions were as follows: preheating at 280°C for 10 minutes, pressing at 3 MPa for one minute, and cooling at 3 MPa for five minutes. The resistance of the molded body was measured by the four-point probe method as described above, and the volume resistivity (Ω) was calculated using the expression below.

The particle obtained in Example 5 was subjected to hot press molding to obtain a molded body. Molding conditions were as follows: preheating at 330°C for 15 minutes, pressing at 3 MPa for one minute, and cooling at 3 MPa for five minutes. The resistance of the molded body was measured by the four-point probe method as described above, and the volume resistivity (Ω) was calculated using the expression below.

The particle obtained in Example 6 was subjected to hot press molding to obtain a molded body. Molding conditions were as follows: preheating at 390°C for 10 minutes, pressing at 3 MPa for one minute, and cooling at 3 MPa for five minutes. The resistance of the molded body was measured by four-terminal sensing as described above, and the volume resistivity (Ω) was calculated using the expression below.

$$\text{Volume resistance value } (\Omega) = \text{Voltage (V)/Current (I)}$$

Next, the volume resistivity (Ω·cm) was calculated using the expression below.

Volume resistivity (Ω·cm) = Volume resistance value (Ω) × Cross-sectional area ($cm^2$) of cylinder/Thickness (cm) of cylinder

Here, the cross-sectional area of the cylinder refers to the area of a cross-sectional plane perpendicular to the height direction

<Dispersion state>

The molded body used in the volume resistivity measurement was observed with an optical microscope. The obtained image was subjected to binarization processing to calculate the area of the filler (CNT), and the number of aggregates with a size of 50 μm or more was analyzed. The molded bodies were rated as "o" when the number of aggregates was 20 or fewer per 0.3 $mm^2$ and as "×" when the number was more than 20.

Table 1 shows the results. FIG. 1 shows the optical microscope photograph of the molded body.

In the optical microscope image of Example 1 (FIG. 1), a network-like CNT structure is observed. This is not due to aggregation of the CNT but because the CNT is finely dispersed in the FEP (high performance engineering plastic resin).

Example 2 and Comparative Example 1

A particle was prepared as in Example 1, except that the types and charge amounts of components were changed as indicated in Table 1. The particle was measured and evaluated as in Example 1.
Table 1 shows the results. FIG. 2 and FIG. 3 show the optical microscope photographs of the molded bodies in Example 2 and Comparative Example 1, respectively.

Example 3

The high performance engineering plastic resin was changed from FEP to PFA, and the solvent used in the step 1 was changed from PGME to water. NMP used in the step 2 was changed to water. A particle was prepared as in Example 1, except that the types and charge amounts of components were changed as indicated in Table 1. The particle was measured and evaluated as in Example 1. Table 1 shows the results. FIG. 4 shows the optical microscope photograph of the molded body in Example 3.

Example 4

The high performance engineering plastic resin was changed from FEP to polyethersulfone (PES), and the solvent used in the step 1 was changed from PGME to water. NMP used in the step 2 was changed to water. A particle was prepared as in Example 1, except that the types and charge amounts of components were changed as indicated in Table 1. The particle was measured and evaluated as in Example 1. Table 1 shows the results. FIG. 5 shows the optical microscope photograph of the molded body in Example 4.

Example 5

The high performance engineering plastic resin was changed from FEP to a liquid crystal polymer (LCP), and the solvent used in the step 1 was changed from PGME to water. NMP used in the step 2 was changed to water. A particle was prepared as in Example 1, except that the types and charge amounts of components were changed as indicated in Table 1. The particle was measured and evaluated as in Example 1. Table 1 shows the results. FIG. 6 shows the optical microscope photograph of the molded body in Example 5.

Example 6

The high performance engineering plastic resin was changed from FEP to polyether ether ketone (OEEK), and the solvent used in the step 1 was changed from PGME to water. NMP used in the step 2 was changed to water. A particle was prepared as in Example 1, except that the types and charge amounts of components were changed as indicated in Table 1. The particle was measured and evaluated as in Example 1. Table 1 shows the results.

[Table 1]

| | | Example | | | | | | Comparative Example |
|---|---|---|---|---|---|---|---|---|
| | | 1 | 2 | 3 | 4 | 5 | 6 | 1 |
| Sample | High performance engineering plastic resin | FEP | FEP | PFA | PES | LCP | PEEK | FEP |
| | Oxazoline compound | Pvozo | WS300 | WS300 | WS300 | WS300 | WS300 | None |
| | Filler | MWCNT | SWCNT | SWCNT | SWCNT | SWCNT | SWCNT | MWCNT |

(continued)

| | | Example | | | | | | Comparative Example |
|---|---|---|---|---|---|---|---|---|
| | | 1 | 2 | 3 | 4 | 5 | 6 | 1 |
| Step 1 (Charge amount) | High performance engineering plastic resin (g) | 3 | 2 | 2 | 2 | 2 | 2 | - |
| | PGME (g) | 30 | 20 | - | - | - | - | - |
| | Water (g) | - | - | 80 | 80 | 80 | 80 | - |
| | Pvozo (g) | 0.12 | - | - | - | - | - | - |
| | WS300 (g) | - | 0.08 | 0.08 | 0.08 | 0.08 | 0.08 | - |
| Step 2 (Charge amount) | High performance engineering plastic resin/Pvozo (g) | 1.2 | - | - | - | - | - | - |
| | High performance engineering plastic resin/WS300 (g) | - | 0.1 | 0.1 | 0.1 | 0.1 | 0.1 | - |
| | High performance engineering plastic resin (g) | - | - | - | - | - | - | 2.4 |
| | NMP (g) | 10 | 2 | - | - | - | - | 15 |
| | Water (g) | - | - | 2 | 2 | 2 | 2 | - |
| | MWCNT (g) | 0.0012 | - | - | - | - | - | 0.0024 |
| | SWCNT (g) | - | 0.0001 | 0.0001 | 0.0001 | 0.0001 | 0.0001 | - |
| Amount (% by mass) | High performance engineering plastic resin | 98.82 | 99.12 | 98.67 | 98.97 | 99.09 | 99.16 | 99.9 |
| | Oxazoline compound | 1.08 | 0.87 | 1.23 | 0.93 | 0.81 | 0.74 | 0 |
| | Filler | 0.1 | 0.01 | 0.1 | 0.1 | 0.1 | 0.1 | 0.1 |
| Coverage | % by mass | 1.09 | 0.87 | 1.25 | 0.94 | 0.82 | 0.75 | 0 |
| Volume resistivity ρ | [Ω · cm] | $3.9 \times 10^6$ | $1.3 \times 10^9$ | $5.3 \times 10^4$ | $3.6 \times 10^7$ | $3.1 \times 10^4$ | $6.0 \times 10^4$ | Over (not flowable) |
| Dispersion state | Evaluation | ○ | ○ | ○ | ○ | ○ | ○ | × |
| | Aggregate (number) | 0 | 2 | 1 | 1 | 0 | 14 | 103 |

**Claims**

**1.** A particle comprising

a high performance engineering plastic resin;
a filler; and
a compound (I) containing multiple groups (I) each represented by the following formula:

[Chem. 1]

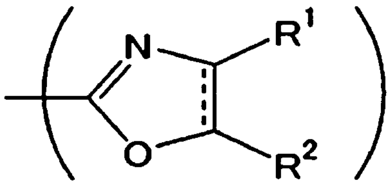

wherein $R^1$ and $R^2$ are the same as or different from each other and each represent a hydrogen atom or an organic group, and may be bound to each other to form a ring structure; and the double line depicted by a solid line and a dashed line represents a single bond or a double bond,
the high performance engineering plastic resin being connected to the filler via the compound (I).

**2.** The particle according to claim 1,
wherein the high performance engineering plastic resin has a thermal decomposition temperature of 330°C or higher.

**3.** The particle according to claim 1 or 2,
wherein the high performance engineering plastic resin has a continuous use temperature of 140°C or higher.

**4.** The particle according to any one of claims 1 to 3,
wherein the high performance engineering plastic resin includes at least one selected from the group consisting of a fluororesin, a liquid crystal polymer, polyetherimide, polyphenylene sulfide, polyaryletherketone, polysulfone, and polyethersulfone.

**5.** The particle according to any one of claims 1 to 4,
wherein the high performance engineering plastic resin includes at least one selected from the group consisting of a fluororesin, a liquid crystal polymer, polyaryletherketone, and polyethersulfone.

**6.** The particle according to any one of claims 1 to 5,
wherein the high performance engineering plastic resin includes a perfluororesin.

**7.** The particle according to any one of claims 1 to 6,
wherein the high performance engineering plastic resin includes at least one selected from the group consisting of polytetrafluoroethylene, a tetrafluoroethylene/perfluoro(alkyl vinyl ether) copolymer, and a tetrafluoroethylene/hexafluoropropylene copolymer.

**8.** The particle according to any one of claims 1 to 7,
wherein the high performance engineering plastic resin includes at least one selected from the group consisting of a tetrafluoroethylene/perfluoro(alkyl vinyl ether) copolymer and a tetrafluoroethylene/hexafluoropropylene copolymer.

**9.** The particle according to any one of claims 1 to 8,
wherein the filler includes a nanofiller.

**10.** The particle according to any one of claims 1 to 9,
wherein the filler includes carbon nanotubes.

**11.** The particle according to any one of claims 1 to 10,
wherein the filler includes at least one selected from the group consisting of multilayer carbon nanotubes and monolayer carbon nanotubes.

**12.** The particle according to any one of claims 1 to 11,
wherein the filler is contained in an amount of 0.001 to 30% by mass.

**13.** The particle according to any one of claims 1 to 12,
wherein the group (I) is an oxazoline group, and the compound (I) is an oxazoline compound.

**14.** The particle according to claim 13,
wherein the oxazoline compound is an oxazoline group-containing polymer.

**15.** The particle according to claim 14,
wherein the oxazoline group-containing polymer has a molecular weight of 2,000 to 400,000.

**16.** The particle according to claim 14 or 15,
wherein the oxazoline group-containing polymer contains at least one selected from the group consisting of a 2-vinyl-2-oxazoline-derived repeating unit and a 2-isopropenyl-2-oxazoline-derived repeating unit.

**17.** The particle according to any one of claims 14 to 16,
wherein the oxazoline group-containing polymer is poly-2-vinyl-2-oxazoline.

**18.** The particle according to any one of claims 14 to 16,
wherein the oxazoline group-containing polymer is a copolymer of 2-isopropenyl-2-oxazoline and an acrylic monomer.

**19.** The particle according to any one of claims 1 to 18,
wherein the compound (I) is contained in an amount of 0.01 to 50% by mass.

**20.** The particle according to any one of claims 1 to 19,
wherein the high performance engineering plastic resin is contained in an amount of 80 to 99.9% by mass, the filler is contained in an amount of 0.01 to 0.5% by mass, and the compound (I) is contained in an amount of 0.1 to 10% by mass.

**21.** A composition comprising the particle according to any one of claims 1 to 20.

**22.** The composition according to claim 21, which is solid or liquid at 25°C.

**23.** A molded body including the composition according to claim 21 or 22.

**24.** The molded body according to claim 23, which has a volume resistivity of $1.0 \times 10^{10}$ Ω·cm or less.

**25.** The molded body according to claim 23 or 24,
wherein not more than 20 aggregates with a width of 50 μm or more are observed in an area of 0.3 $mm^2$ in an optical microscopic image.

**26.** A method for producing a particle, the method comprising

a step 1 of mixing a component A and a compound (I) containing multiple groups (I) each represented by the following formula:

[Chem. 2]

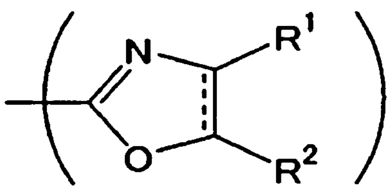

wherein $R^1$ and $R^2$ are the same as or different from each other and each represent a hydrogen atom or an organic group, and may be bound to each other to form a ring structure; and the double line depicted by a solid line and a dashed line represents a single bond or a double bond,
a step 2 of mixing a mixture obtained in the step 1 and a component B in the presence of a solvent, and

a step 3 of collecting a particle from a dispersion obtained in the step 2,
the component A including one of a high performance engineering plastic resin and a filler, while the component B including the other.

**27.** The method for producing a particle according to claim 26,
wherein the step 1 includes mixing the component A and the compound (I) in the presence of a solvent.

**28.** The method for producing a particle according to claim 26 or 27,
wherein the step 2 includes mixing the component A connected to the compound (I) and the component B in the presence of a solvent.

**29.** The method for producing a particle according to any one of claims 26 to 28,
wherein the step 3 includes collecting a particle from the dispersion obtained in the step 2 by centrifugation.

FIG.1

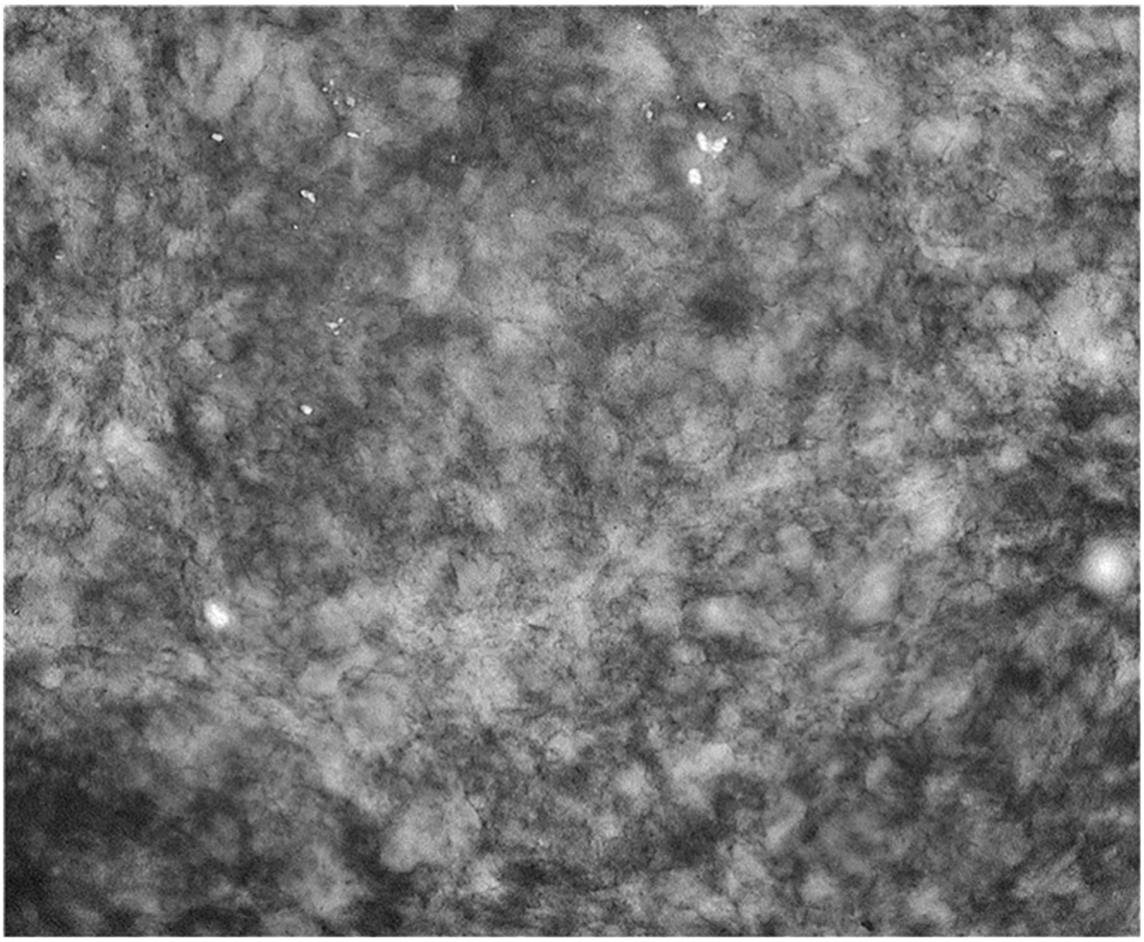

FIG.2

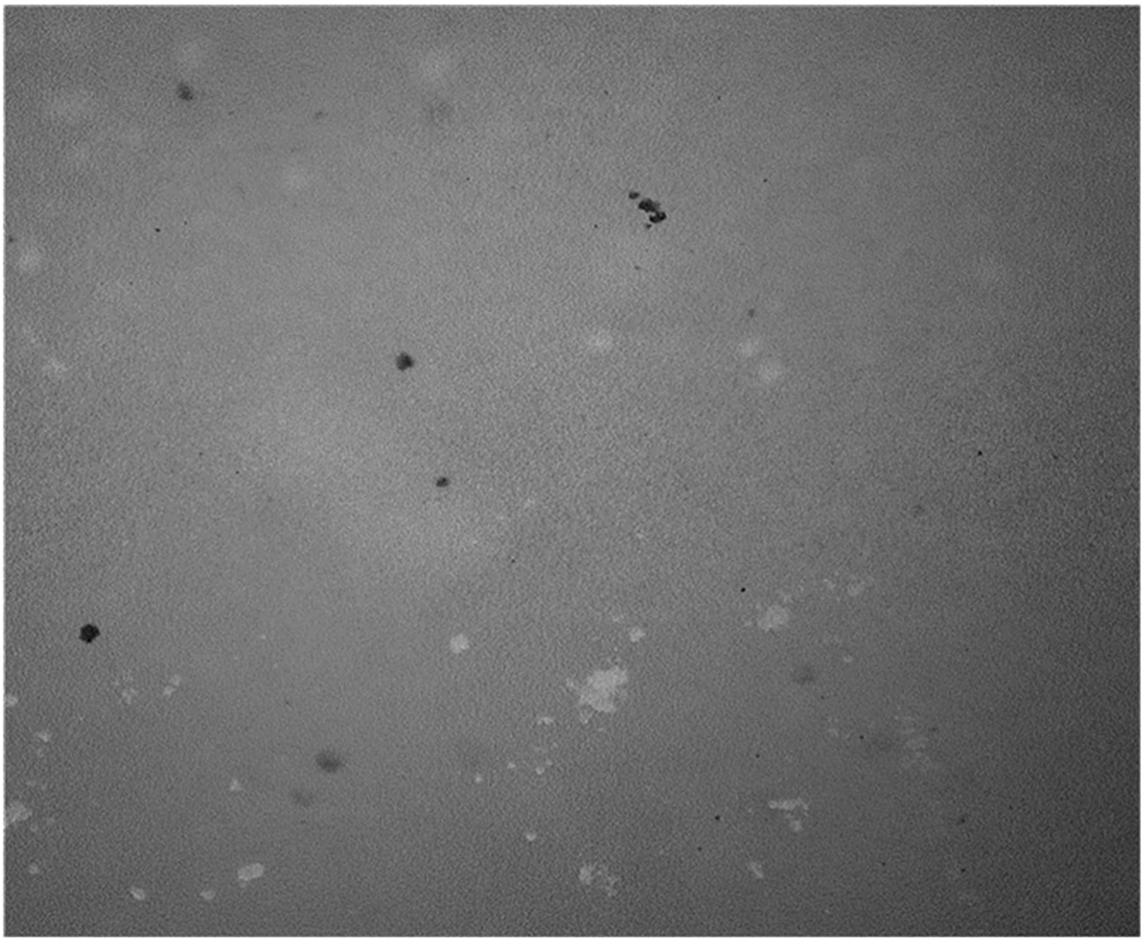

FIG.3

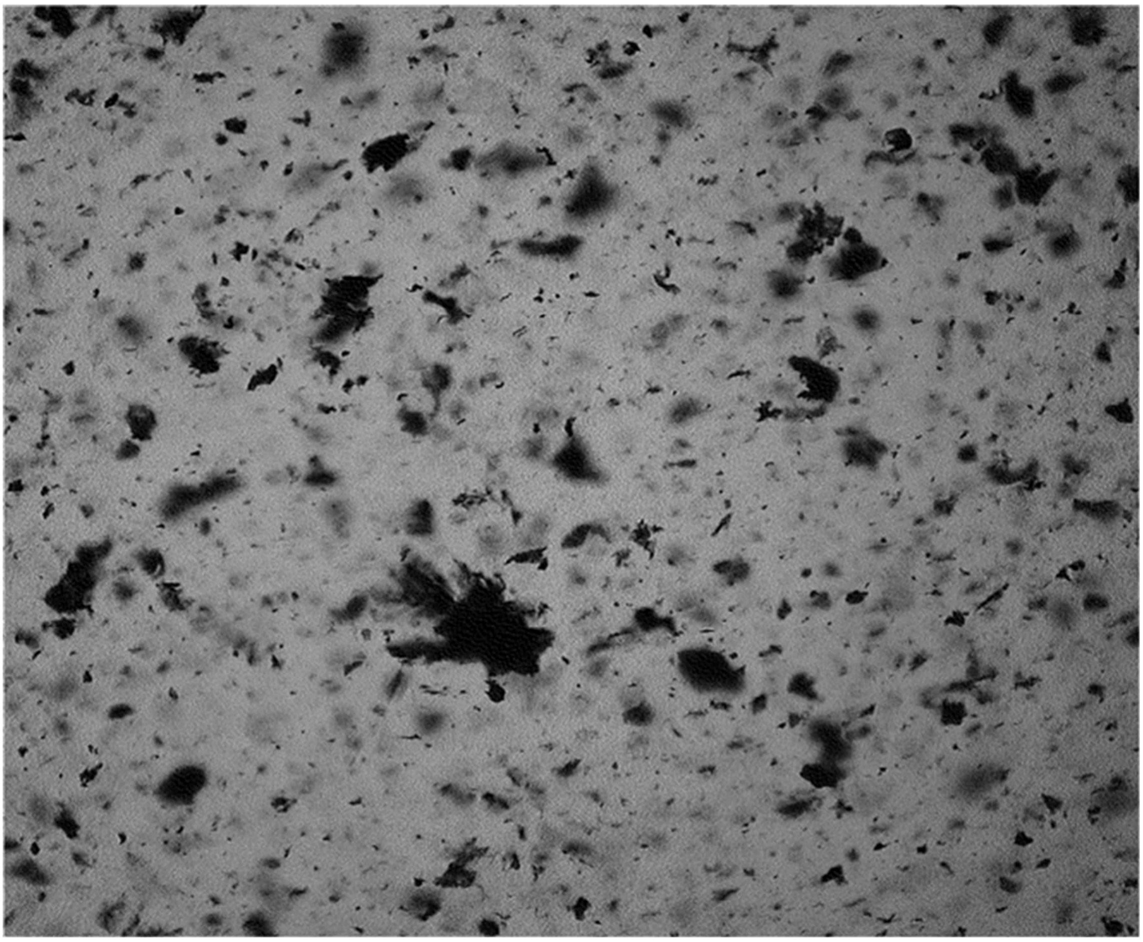

FIG.4

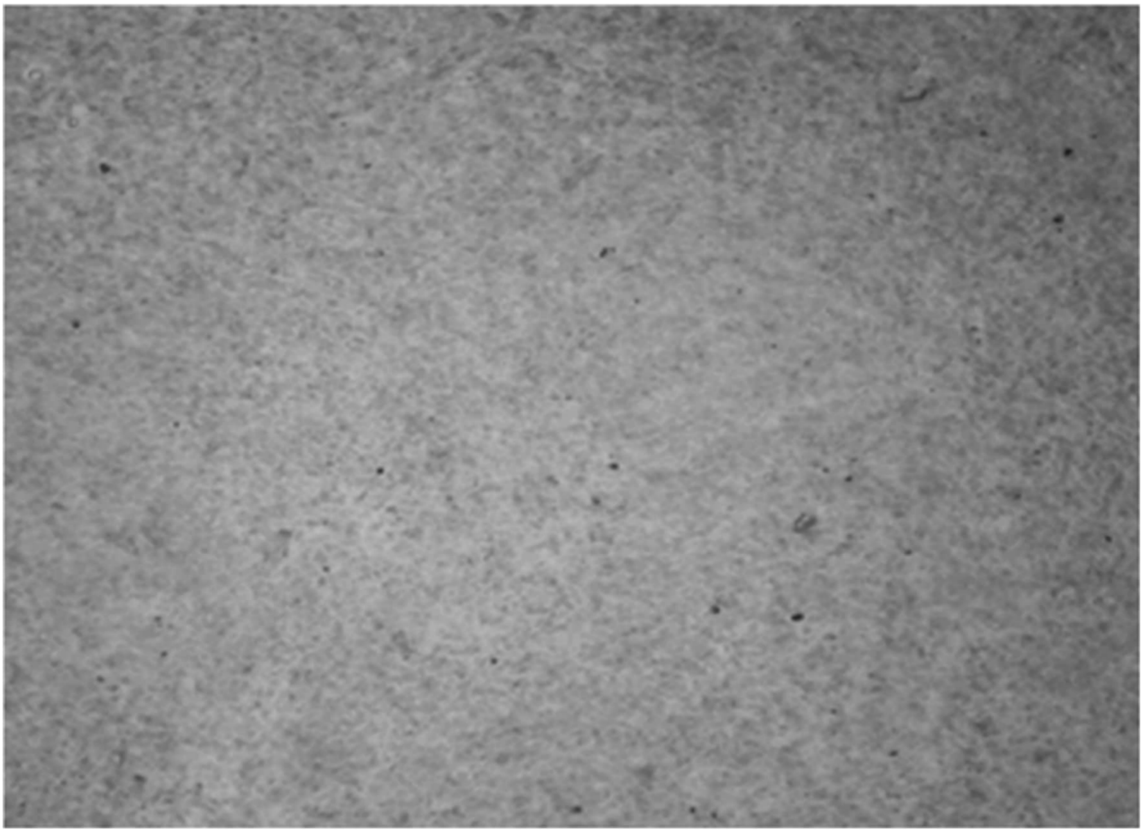

FIG.5

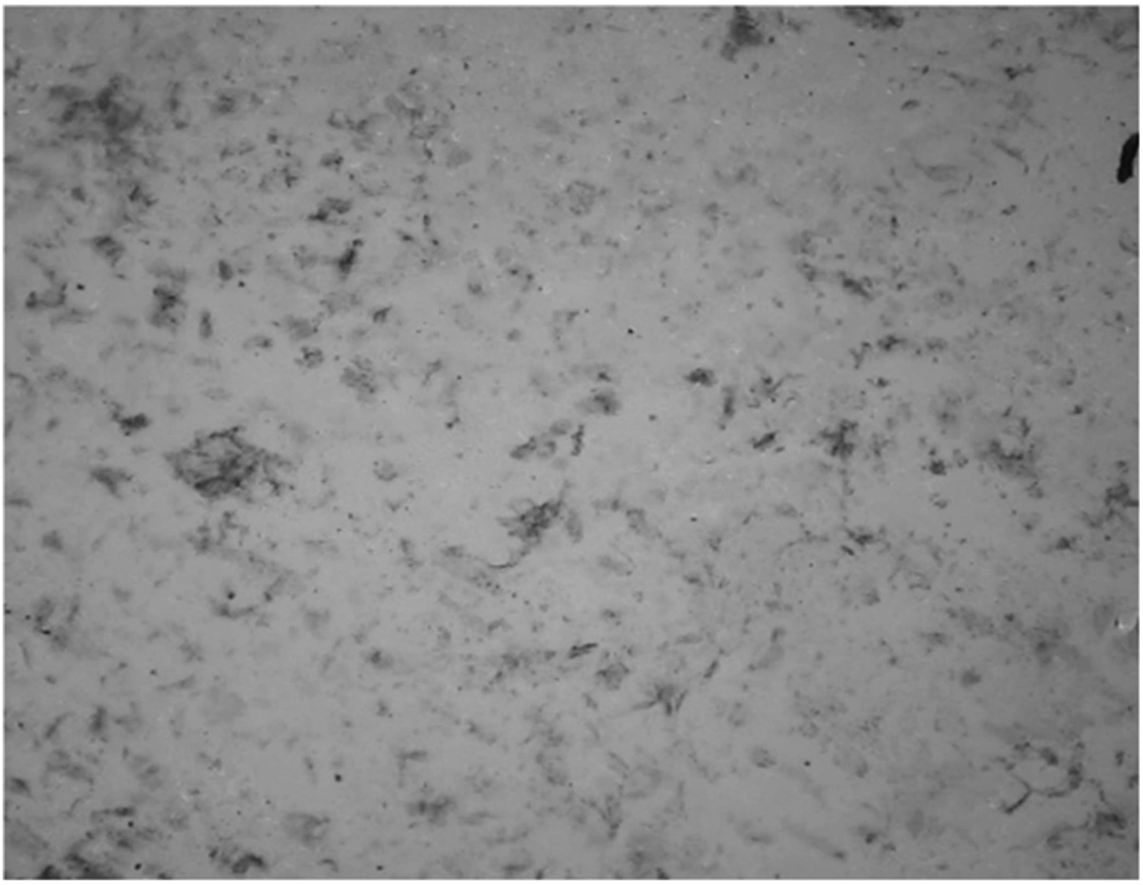

FIG.6

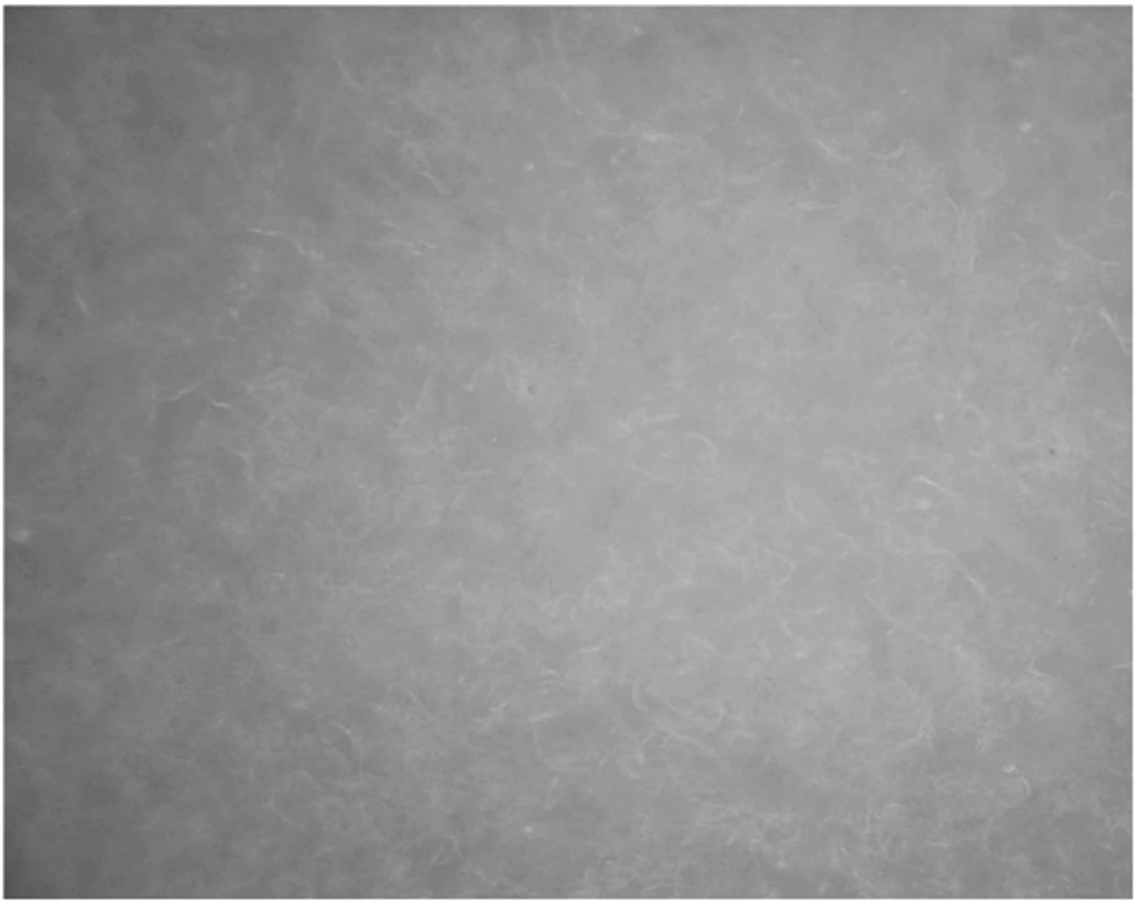

**INTERNATIONAL SEARCH REPORT**

International application No.
**PCT/JP2025/012834**

**A. CLASSIFICATION OF SUBJECT MATTER**

***C08L 101/02***(2006.01)i; ***C08G 81/02***(2006.01)i; ***C08K 3/04***(2006.01)i; ***C08K 3/013***(2018.01)i; ***C08K 5/353***(2006.01)i; ***C08L 27/12***(2006.01)i; ***C08L 101/00***(2006.01)i
FI: C08L101/02; C08K3/013; C08L101/00; C08G81/02; C08L27/12; C08K3/04; C08K5/353

According to International Patent Classification (IPC) or to both national classification and IPC

**B. FIELDS SEARCHED**

Minimum documentation searched (classification system followed by classification symbols)

C08L101/02; C08G81/02; C08K3/04; C08K3/013; C08K5/353; C08L27/12; C08L101/00

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>A | JP 2016-006770 A (NISSAN CHEM IND LTD.) 14 January 2016 (2016-01-14)<br>claims, examples, paragraphs [0019], [0041] | 1-19, 21-29<br><br>20 |
| A | JP 2005-146081 A (JUNKOSHA CO., LTD.) 09 June 2005 (2005-06-09)<br>entire text, all drawings | 1-29 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 May 2025** | **20 May 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2025/012834**

| Patent document cited in search report | Publication date (day/month/year) | Patent family member(s) | Publication date (day/month/year) |
|---|---|---|---|
| JP 2016-006770 A | 14 January 2016 | US 2016/0200850 A1<br>claims, examples, paragraphs [0043], [0091]<br>EP 3040115 A1<br>CN 105473216 A<br>KR 10-2016-0045792 A | |
| JP 2005-146081 A | 09 June 2005 | US 2005/0159540 A1<br>entire text, all drawings<br>KR 10-2006-0093120 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005146081 A